# EUROPEAN PATENT SPECIFICATION

(11) **EP 4 413 534 B1**
(45) Date of publication and mention of the grant of the patent: **15.10.2025**
(21) Application number: 22793548.3
(22) Date of filing: 27.09.2022
(51) Int. Cl.: G06T 7/579

(54) **REMOVING NON-RELEVANT POINTS OF A POINT CLOUD**
ENTFERNUNG NICHT RELEVANTER PUNKTE EINER PUNKTWOLKE
ÉLIMINATION DE POINTS NON PERTINENTS D'UN NUAGE DE POINTS

(30) Priority: 04.10.2021 DE 102021125653
(43) Date of publication of application: 14.08.2024
(73) Proprietor: Valeo Schalter und Sensoren GmbH, 74321 Bietigheim-Bissingen (DE)
(72) Inventor: JEANNE, Axel, 94000 Creteil (DE)
(74) Representative: Jauregui Urbahn, Kristian
(86) International application number: PCT/EP2022/076808
(87) International publication number: WO 2023/057261

(56) References cited:
- CN-A- 110 850 439
- US-A1- 2018 300 560
- US-A1- 2021 201 578
- KIM GISEOP ET AL: "Remove, then Revert: Static Point cloud Map Construction using Multiresolution Range Images", 2020 IEEE/RSJ INTERNATIONAL CONFERENCE ON INTELLIGENT ROBOTS AND SYSTEMS (IROS), 24 October 2020 (2020-10-24), pages 10758 - 10765, XP055918229, ISBN: 978-1-7281-6212-6, Retrieved from the Internet <URL:http://ras.papercept.net/images/temp/IROS/files/0855.pdf> DOI: 10.1109/IROS45743.2020.9340856
- HYUNGTAE LIM ET AL: "ERASOR: Egocentric Ratio of Pseudo Occupancy-based Dynamic Object Removal for Static 3D Point Cloud Map Building", ARXIV.ORG, CORNELL UNIVERSITY LIBRARY, 201 OLIN LIBRARY CORNELL UNIVERSITY ITHACA, NY 14853, 7 March 2021 (2021-03-07), XP081907266, DOI: 10.1109/LRA.2021.3061363
- FENG MENGDAN ET AL: "Towards Precise Vehicle-Free Point Cloud Mapping: An On-vehicle System with Deep Vehicle Detection and Tracking", 2018 IEEE INTERNATIONAL CONFERENCE ON SYSTEMS, MAN, AND CYBERNETICS (SMC), IEEE, 7 October 2018 (2018-10-07), pages 1288 - 1293, XP033502806, DOI: 10.1109/SMC.2018.00225

## Description

The present invention refers to a method for removing non-relevant points of a point cloud corresponding to a point representation of an environment of an ego vehicle with multiple individual points.

The present invention also refers to a driving support system comprising at least one environment sensor for recognizing an environment of an ego vehicle and a processing unit, which receives sensor information from the at least one environment sensor via a data connection and processes the sensor information, wherein the driving support system is adapted to perform the above method.

An environment of an ego vehicle can be represented by a point cloud comprising multiple individual points. These individual points can also be referred to as features. Each of the features at least partially defines an object or structure in the environment of the ego vehicle.

Such a point cloud can be generated by the ego vehicle itself when driving and recognizing the environment using environment sensors. In particular, environment sensors like LiDAR or radar provide a representation of the environment based on individual measurement points, which have a defined position in the environment of the ego vehicle. Also when using other environment sensors like optical cameras, which provide a two-dimensional representation of the environment, features can be extracted e.g. from the provided camera images. Sensor information from multiple environment sensors and/or different kinds of environment sensors can be combined to provide the point cloud.

The point cloud can also be a pre-recorded point cloud, which can e.g. be provided from externally to the ego vehicle. The point cloud can be stored or provided as a kind of map for use by the ego vehicle.

The point cloud helps the ego vehicle to move within the environment, for example to determine a detailed position in respect to the point cloud or to determine a course for moving the ego vehicle within the environment to reach a particular position. Such systems are known e.g. as simultaneous localization and mapping (SLAM). The ego vehicle determines its current environment using its environment sensors and matches the recognition of the environment with the point cloud. These systems can be highly dynamic, so that a generated point cloud can be used for mapping and almost immediately for localization. In each case, different kinds of environment sensors including optical cameras, LiDAR-based environment sensors or radar sensors can be used alone or in combination.

In order to define the environment, it is desired that the point cloud only contains valid and relevant features. However, unwanted features can occur due to e.g. mobile or in particular moving objects or even noise. Such unwanted features are difficult to process, since the ego vehicle has to decide whether they are valid or not, i.e. which features have to be kept and which features have to be discarded. Furthermore, processing of such unwanted features increases requirements in respect to processing power of the ego vehicle. Features along the course of the ego vehicle are of high interest, since they are essential for calculating and following the course. In particular, mobile objects can cause individual points in the point cloud, which do not refer to the environment. For example, a third party vehicle waiting at a red traffic light can result in a detection as part of the environment, even though it will start moving when the traffic light turns green.

Therefore, when generating a point cloud, a high level of accuracy is desired.

The patent application us2021201578 describes systems and methods for presenting a reconstructed representation of a moving object detected in a scene. The method may involve (i) identifying, in a 3D point cloud representative of a real-world environment in which a vehicle was operating during a window of time, a set of 3D data points associated with an object detected in the environment that comprises different subsets of 3D data points corresponding to different capture times within the window of time, (ii) based at least on the 3D data points, evaluating a trajectory of the object and thereby determining that the object was in motion during some portion of the window of time, (iii) in response to determining that the object was in motion, reconstructing the different subsets of 3D data points into a single, assembled 3D representation of the object, and (iv) generating a time-aggregated, 3D visualization of the environment that presents the single, assembled 3D representation of the object at one or more points along the trajectory of the object.

The patent application us2018300560 describes a method and a device for generating an occupancy map of an environment of a vehicle. It concerns a method of generating an occupancy map representing free and occupied space around a vehicle. The occupancy map is divided into a plurality of cells M x,y. The method comprises: capturing two consecutive images by a camera mounted on the vehicle; generating optical flow vectors from the two consecutive images; estimating 3D points in the space around the vehicle from the optical flow vectors; generating rays from the camera to each of the estimated 3D points, wherein intersection points of the rays with the cells M x,y defining further 3D points; determining for each of the cells M x,y a function L x , y t for a time step t; and determining an occupancy probability from the function L x , y t for each of the cells M x,y .

The patent application CN110850439 describes a method for constructing high-precision three dimensional point cloud map. The invention discloses a method for constructing a high-precision three-dimensional point cloud map. The method includes determining a current position and a driving direction of a surveying and mapping vehicle in a high-precision vector map; according to the current position and orientation in the high-precision vector map, rotating and translating current point cloud frames scanned by a laser radar into a coordinate system of the high-precision vector map; according to a current available road region extracted from the high-precision vector map, planning a corresponding available road region in current point cloud data frames and millimeter wave radar data frames; according to speed and positon information of surrounding vehicles collected by a millimeter wave radar, deleting point clouds, which are determined as shielded, in the available road region in the current frames; and screening, splicing and optimizing key frames to acquire the high-precision point cloud map. The method has the advantages that the time for drawing the high-precision three-dimensional point cloud map is shortened, and the manual cost is reduced; the risk of leaking key geographic information is reduced;ground point cloud cavities caused by manual deletion of the point clouds of the vehicles are avoided.

It is an object of the present invention to provide a method for removing non-relevant points of a point cloud corresponding to a point representation of an environment of an ego vehicle with multiple individual points and a driving support system for performing this method, which enable a simple and reliable way of removing non-relevant points from the point cloud.

This object is achieved by the independent claims. Advantageous embodiments are given in the dependent claims.

In particular, the present invention provides a method for removing non-relevant points of a point cloud corresponding to a point representation of an environment of an ego vehicle with multiple individual points, comprising the steps of providing the point cloud covering a position of the ego vehicle, recognizing the environment of the ego vehicle using at least one environment sensor of the ego vehicle, determining a current position of the ego vehicle within the point cloud based on the recognition of the environment of the ego vehicle, determining a projection area with a projection of the ego vehicle into the point cloud based on the determined current position of the ego vehicle, and removing individual points from the point cloud in the projection area of the ego vehicle as non-relevant points.

The present invention also provides a driving support system comprising at least one environment sensor for recognizing an environment of an ego vehicle and a processing unit, which receives sensor information from the at least one environment sensor via a data connection and processes the sensor information, wherein the driving support system is adapted to perform the above method.

The basic idea of the invention is to use the ego vehicle as a kind of eraser. When the ego vehicle is located in the environment as covered by the point cloud, it covers a certain ground area, which corresponds to the projection area in the point cloud. Since the ego vehicle is located at this position, no relevant obstacles or structures can be located at the position of the ego vehicle. Otherwise, the ego vehicle would not have reached its current position. Therefore, also the point cloud is supposed to be void of relevant obstacles or structures at the corresponding position as defined by the projection area, and individual points covered by the projection area can be deleted, since they cannot be relevant, regardless if these non-relevant points correspond to real objects or structures or are even based on noise or other detection errors when sensing the environment.

The points of the point cloud have positions, which are at least two-dimensional positions. When the points of the point cloud have a two-dimensional position, obstacles and/or structures can be mapped to ground regardless of their vertical position. When the points of the point cloud have three-dimensional positions, obstacles and/or structures can be present at a certain height, but not necessarily beginning at ground level. E.g. a traffic light or traffic sign can be attached to a bridge crossing horizontally the street or road. This can be relevant e.g. for trucks, so that individual points corresponding to this bridge can be considered, but only for trucks and not for regular passenger vehicles having a lower height.

As already specified above, non-relevant points are individual points of the point cloud, which can be discarded. When the ego vehicle can pass a certain ground area, no relevant obstacles or structures can be present. In case of the points of the point cloud having three-dimensional positions, the step of removing individual points from the point cloud in the projection area of the ego vehicle as non-relevant points can be performed under consideration of the three-dimensional positions of the individual points. For example, only points in a space corresponding to legal vehicle heights can be removed in the projection area. Preferably, the step of removing individual points from the point cloud in the projection area of the ego vehicle as non-relevant points is performed under consideration of a height of the ego vehicle. Hence, points in a space corresponding to the height of the ego vehicle can be removed in the projection area.

The ego vehicle can be any kind of vehicle, e.g. a passenger car or a truck, which can be driven by a human driver or autonomously.

The environment of the ego vehicle is an area around the ego vehicle. The environment of the ego vehicle can be represented by the point cloud comprising the multiple individual points. These individual points can also be referred to as features. Each of the features at least partially defines an object or structure in the environment of the ego vehicle.

The point cloud can have different extension. In a horizontal plane, the point cloud can extend from tens of meters up to hundreds or even thousands meters in each plane direction. In case of a three-dimensional point cloud, the point cloud can extend up to several tens of meters.

The current position can be based on additional position information, e.g. satellite positioning data, so that the position can be matched e.g. with map information. The position of the ego vehicle can include an orientation of the ego vehicle. This can be important e.g. in case the vehicle does not have a circular shape to define the orientation of the projection area.

The projection area can be defined e.g. based on a normal or average width and length of the ego vehicle. The projection area is based on the current position of the ego vehicle. However, it is not required that the current position of the ego vehicle defines a center of the projection area.

The sensor information is provided from the at least one environment sensor via the data connection to the processing unit of the driving support system. The sensor information can comprise raw data or pre-processed data. The data connection can be a dedicated connection to transmit the sensor information from the at least one environment sensor to the processing unit, e.g. a point to point connection from each environment sensor to the processing unit, or a data bus shared by some or all of multiple environment sensors. Furthermore, the data connection can be a shared data connection used by different kinds of devices of the ego vehicle, e.g. a multi-purpose data bus. The data connection can be implemented e.g. as CAN-bus, LIN-bus, or others.

The processing unit processes the received sensor data and removes the non-relevant points from the point cloud. The processing unit can be any kind of processing unit suitable for the use in the ego vehicle. Such processing units are typically known as ECU (electronic control unit). The processing unit can be shared for performing multiple tasks or applications.

According to a modified embodiment of the invention, providing the point cloud covering a position of the ego vehicle comprises generating the point cloud by the ego vehicle. Hence, the point cloud is generated when the ego vehicle is used, in particular when driving. The point cloud can be a highly dynamic point cloud, which is generated for a part of the environment, which is covered by the at least one environment sensor. Accordingly, part of the point cloud, which are out of a range of the at least one environment sensor can be discarded immediately. Alternatively, the point cloud can be stored after generation for further usage.

According to a modified embodiment of the invention, providing the point cloud covering a position of the ego vehicle comprises receiving the point cloud as externally generated point cloud. The point cloud can be provided as external information, which is received by the ego vehicle e.g. via a data link. In an alternative embodiment, the point cloud can be stored in the ego vehicle. Similarly, also the point cloud as received via the data link can be stored in the ego vehicle for further usage.

In general, the method can be performed without knowledge about the ego vehicle. A general template can be used for the projection of the ego vehicle. According to a modified embodiment of the invention, the method comprises an additional step of determining vehicle dimensions of the ego vehicle, and the step of determining a projection area with a projection of the ego vehicle into the point cloud based on the determined current position of the ego vehicle comprises determining a size of the projection area based on the determined vehicle dimensions of the ego vehicle. Since current vehicles can differ a lot in respect to their size, the projection can be improved with knowledge of the vehicle dimensions of the ego vehicle. This does not require that the projection is limited to the size of the ego vehicle. For example, margins can be added to the vehicle dimensions.

According to a modified embodiment of the invention, the method comprises an additional step of storing at least one previous position of the ego vehicle, and the step of determining a projection area with a projection of the ego vehicle into the point cloud comprises at least one projection of the ego vehicle for the at least one previous position of the ego vehicle. By storing the previous positions of the ego vehicle, the same principle as applied to the current position of the ego vehicle can be applied to the previous position(s). Hence, it is supposed that no environment features will appear in an area, where the ego vehicle has already passed. For example, a combined projection area can be provided as a kind of belt covering the current and the previous position(s), and the non-relevant points can be removed from the point cloud in this area. Hence, the belt is kept free from individual points. The same can apply when a three-dimensional removal of non-relevant points from the point cloud is performed. In this case, the non-relevant points are removed in a cubical or tubular area.

According to a modified embodiment of the invention, the method comprises an additional step of transmitting the determined current position of the ego vehicle within the point cloud to a remote site for removing the individual points from the point cloud in the projection area of the ego vehicle. Hence, the steps of determining a projection area with a projection of the ego vehicle into the point cloud based on the determined current position of the ego vehicle and removing individual points from the point cloud in the projection area of the ego vehicle as non-relevant points can be performed at the remote site. The steps can be performed additionally to performing these steps in the ego vehicle. The processing at the remote site can be performed in particular to update point cloud data stored at the remote site. Hence, when the point cloud is provided to an ego vehicle, the point cloud can be provided without the non-relevant points. The current position(s) can be transferred immediately. Alternatively, multiple current positions can be stored and transmitted together, e.g. depending on availability of a data link. Processing at the remote site can be done online or offline. In one embodiment, the projection area is determined in the ego vehicle and transferred together with the position to the remote site. Alternatively, the projection area can be determined at the remote site. In the latter case, the remote site preferably receives vehicle dimensions from the ego vehicle or determines the vehicle dimensions of the ego vehicle, e.g. based on an identification of the ego vehicle.

According to a modified embodiment of the invention, the method comprises an additional step of transmitting the point cloud after removal of the individual points in the projection area of the ego vehicle to a remote site. Hence, an update of the point cloud after removal of the non-relevant points in the projection area of the ego vehicle is transferred from the ego vehicle to the remote site. Accordingly, the updated point cloud can be provided for further usage, e.g. by other vehicles or by the ego vehicle itself when driving again in the same environment.

Alternatively, information in respect to the removed individual points in the projection area of the ego vehicle is transmitted to the remote site. Hence, only information in respect to the removed individual points in the projection area of the ego vehicle is transmitted to the remote site. This can include the respective points, in particular including their position, or a definition of an area, in which the non-relevant points are to be removed.

According to a modified embodiment of the invention, the method comprises an additional step of storing the current position of the ego vehicle, and the steps of determining a projection area with a projection of the ego vehicle into the point cloud based on the determined current position of the ego vehicle and removing individual points from the point cloud in the projection area of the ego vehicle as non-relevant points are performed as off-line processing steps. The steps of determining a projection area with a projection of the ego vehicle into the point cloud based on the determined current position of the ego vehicle and removing individual points from the point cloud in the projection area of the ego vehicle as non-relevant points are supposed to be most time consuming, since they refer to a processing of the point cloud. By performing these steps offline, these steps can be performed e.g. depending on availability of resources. When the ego vehicle is e.g. stopped or even not used, the processing can be performed using available resources. Hence, the method can be performed independent from a current usage of the ego vehicle.

According to a modified embodiment of the invention, the at least one environment sensor comprises at least one out of a LiDAR-based environment sensor, radar sensor or an optical camera. In particular, environment sensors like LiDAR or radar provide a set of individual measurement points with a position of objects and/or structures in the environment of the ego vehicle without further processing. When using other environment sensors like optical cameras, which provide a two-dimensional representation of the environment, features can be extracted e.g. from the provided camera images with a further processing step. Different kinds of environment sensors can be used alone or in combination. Sensor information from multiple environment sensors and/or different kinds of environment sensors can be combined to provide the point cloud.

Features and advantages described above with reference to the inventive method apply equally to the inventive driving support system and vice versa.

These and other aspects of the invention will be apparent from and elucidated with reference to the embodiments described hereinafter. Individual features disclosed in the embodiments can constitute alone or in combination an aspect of the present invention.

Features of the different embodiments can be carried over from one embodiment to another embodiment.

In the drawings:
- Fig. 1: shows a schematic view of an ego vehicle with a driving support system according to a first, preferred embodiment,
- Fig. 2: shows a first driving scenario with the ego vehicle of Fig. 1 driving in a straight direction on a road with three driving lanes and two third party vehicles located in front of the ego vehicle and behind the ego vehicle, and a belt-like projection area,
- Fig. 3: shows an illustration of first driving scenario with the ego vehicle of Fig. 1 driving in a straight direction, wherein one of the third party vehicles is removed as non-relevant,
- Fig. 4: shows a second driving scenario with the ego vehicle of Fig. 1 driving on a road with three driving lanes, wherein the ego vehicle performs a lane change, with multiple projection areas,
- Fig. 5: shows a third driving scenario with the ego vehicle of Fig. 1 driving in an urban area along a street and performing a right turn as a top view with a map-like representation,
- Fig. 6: shows a representation of the third driving scenario of figure 5 as a point cloud,
- Fig. 7: shows the view of figure 6 with an additional driving path of the ego vehicle as shown in figure 5,
- Fig. 8: shows a representation of the third driving scenario of figure 5 as a point cloud after removal of non-relevant points in the area of the ego vehicle passing along the driving path,
- Fig. 9: shows a schematic view of a point cloud with a driving path as fourth driving scenario,
- Fig. 10: shows a schematic view of a point cloud with a driving path as fifth driving scenario, whereby the point cloud forms part of a global point cloud,
- Fig. 11: shows a schematic view of a driving path as sixth driving scenario, whereby the driving path has a three-dimensional tubular shape, and
- Fig. 12: shows a flow chart of a method for removing non-relevant points of a point cloud performed with the ego vehicle of figure 1.

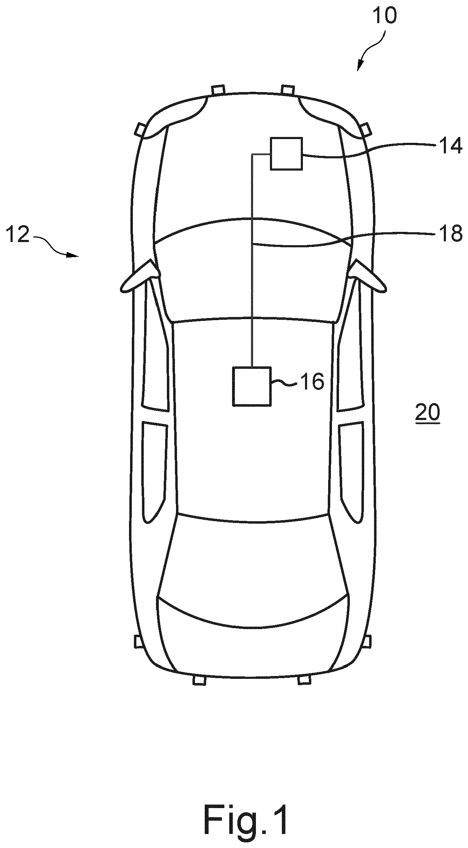

Figure 1 shows an ego vehicle 10 according to a first, preferred embodiment. The ego vehicle 10 can be any kind of vehicle, e.g. a passenger car or a truck, which can be driven by a human driver or autonomously.

The ego vehicle 10 comprises a driving support system 12. As can be seen in detail in figure 1, the driving support system 12 comprises in this embodiment one environment sensor 14 and a processing unit 16, which are connected via a data connection 18. The environment sensor 14 of the first embodiment is provided as LiDAR-based environment sensor, which provides individual measurement points with a position of objects and/or structures in an environment 20 of the ego vehicle 10 without further processing.

In an alternative embodiment, the ego vehicle 10 can comprise as environment sensor 14 one or more LiDAR-based environment sensor(s) alone or together with e.g. optical cameras or radar. Sensor information from the environment sensors 14 can be combined to cover the environment 20 of the ego vehicle 10.

Hence, the environment sensor 14 recognizes the environment 20 of the ego vehicle 10. The environment 20 of the ego vehicle 10 is an area around the ego vehicle 10.

The environment sensor 14 generates sensor information, which is transferred to the processing unit 16 via the data connection 18. The sensor information can comprise raw data or pre-processed data.

The processing unit 16 can be any kind of processing unit 16 suitable for the use in the ego vehicle 10. Such processing units 16 are typically known as ECU (electronic control unit) in the automotive area. The processing unit 16 can be shared for performing multiple tasks or applications.

The data connection 18 can be a dedicated connection to transmit the sensor information from the environment sensor 14 to the processing unit 16 or a data bus. Furthermore, the data connection 18 can be a shared data connection 18 used by different kinds of devices of the ego vehicle 10, e.g. a multi-purpose data bus. The data connection 18 can be implemented e.g. as CAN-bus, LIN-bus, or others.

The processing unit 16 processes the sensor information, wherein the driving support system 12 is adapted to perform the method for removing non-relevant points of a point cloud 22, which is discussed below in detail.

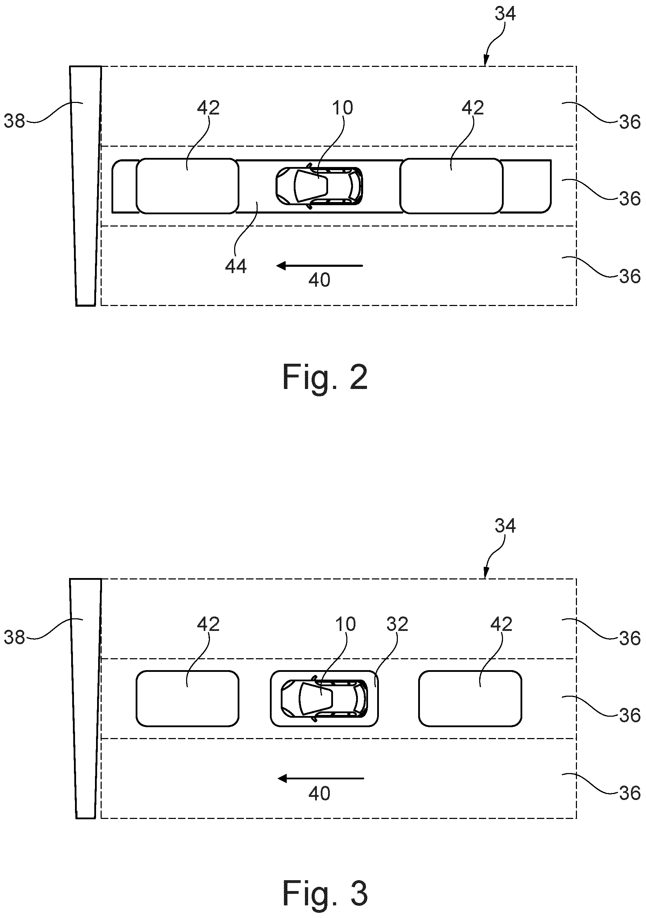

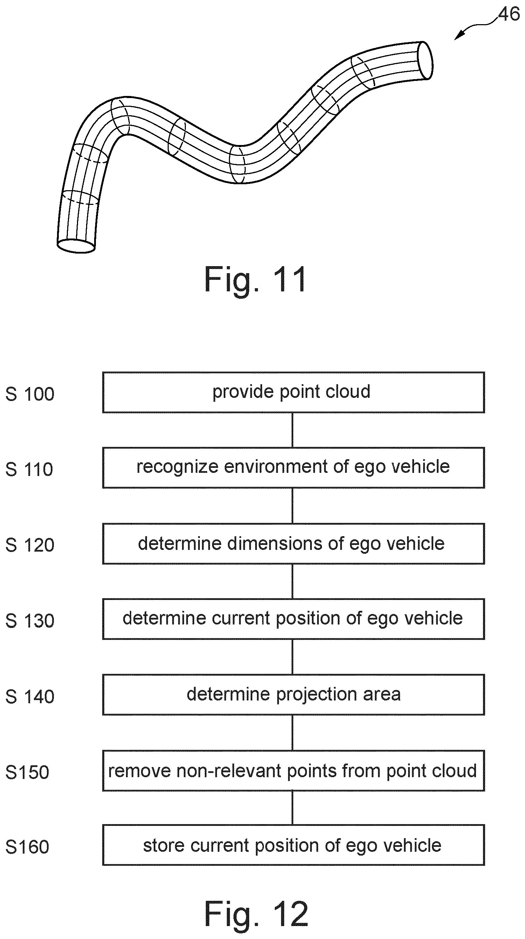

Subsequently will be described a method for removing the non-relevant points of the point cloud 22. The point cloud 22 corresponds to a point representation of the environment 20 of the ego vehicle 10 with multiple individual points 24, which is depicted in figure 12. The method will be discussed with additional reference to figures 2 to 9.

The method starts with step S100 of providing the point cloud 22 covering a position of the ego vehicle 10.

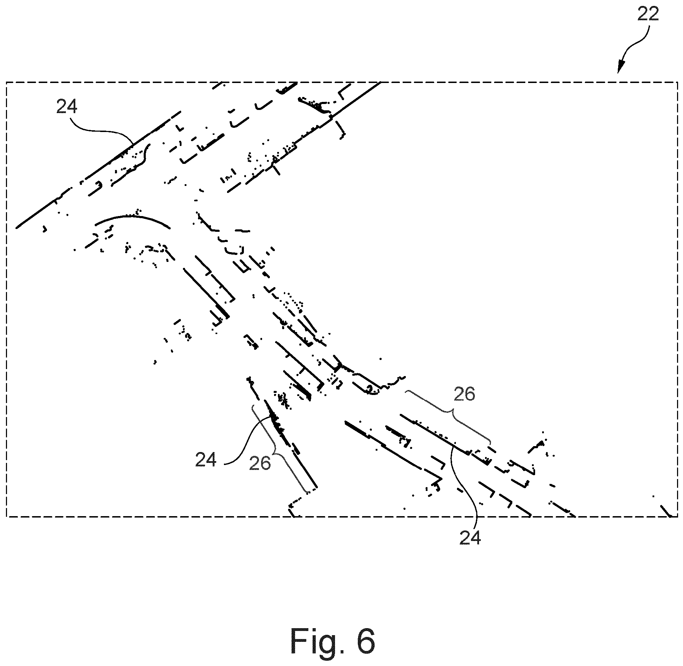

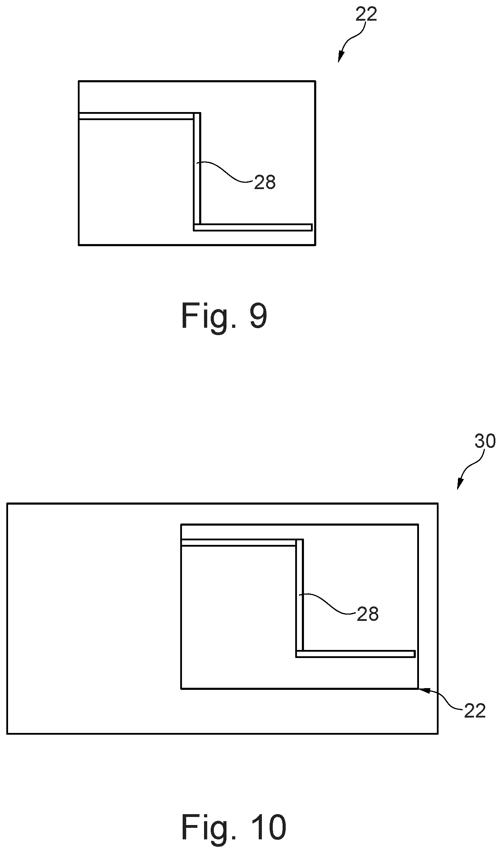

In this embodiment, the point cloud 22 is generated by the ego vehicle 10, in particular the processing unit 16. Hence, the point cloud 22 is generated when the ego vehicle 10 is used, in particular when driving. The point cloud 22 is generated using the environment sensor 14 of the ego vehicle 10 as a set of individual points 24. The individual points 24 have positions, which are in this embodiment two-dimensional positions, which together represent the environment 20 of the ego vehicle 10. These individual points 24 are also referred to as features. The point cloud 22 is schematically shown in figure 9. Furthermore, figure 6 shows a point cloud 22 composed of the individual points 24, which together define objects or structures 26. Hence, each of the individual points 24 at least partially defines an object or structure 28 in the environment 20 of the ego vehicle 10.

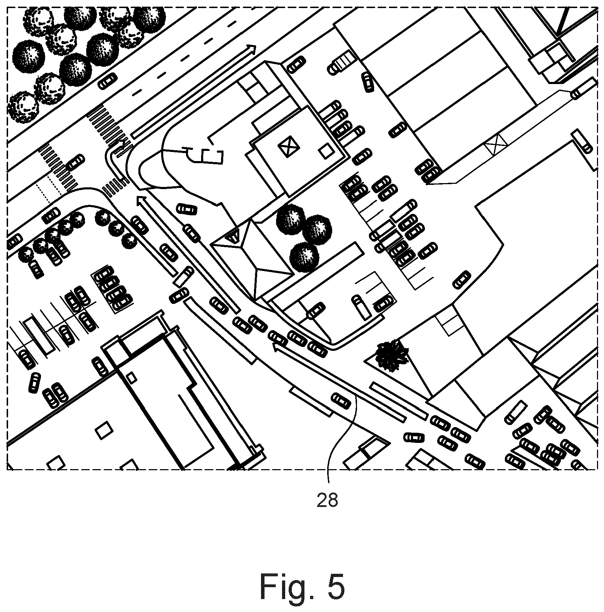

The point cloud 22 of figure 6 corresponds to a driving scene, which is shown as map-like representation in figure 5 with an additionally depicted driving path 28 of the ego vehicle 10. The driving path 28 is also visible in figure 9.

In a modified embodiment, the ego vehicle 10 receives the point cloud 22 as externally generated point cloud 22 via a data link. In a further alternative embodiment, the point cloud 22 is stored in the ego vehicle 10. Hence, the point cloud 22 is provided from the storage. As can be seen in figure 10, in this case a current point cloud 22 corresponds to a subset of a global point cloud data set 30.

Step S110 refers to recognizing the environment 20 of the ego vehicle 10 using the environment sensor 14 of the ego vehicle 10. In this embodiment, the recognition of the environment 20 is performed as part of an algorithm for performing simultaneous localization and mapping (SLAM).

Step S120 refers to determining vehicle dimensions of the ego vehicle 10. The vehicle dimensions are determined from a storage of the ego vehicle 10, which contains an identification of the ego vehicle 10 comprising the vehicle dimensions.

Step S130 refers to determining a current position of the ego vehicle 10 within the point cloud 22 based on the recognition of the environment 20 of the ego vehicle 10. In this embodiment, the current position of the ego vehicle 10 within the point cloud 22 is determined as part of the algorithm for performing simultaneous localization and mapping (SLAM). The current position of the ego vehicle 10 comprises an orientation of the ego vehicle 10, e.g. an angular orientation of the ego vehicle10.

Step S140 refers to determining a projection area 32 with a projection of the ego vehicle 10 into the point cloud 22 based on the determined current position of the ego vehicle 10.

The projection area 32 can be best seen in figure 3 of the first driving example. The first driving example comprises figures 2 and 3. According to the first driving example, the ego vehicle 10 is driving on a road 34 with three driving lanes 36, whereby the ego vehicle 10 is located on a central driving lane 36. A traffic light 38 is located in driving direction 40 ahead of the ego vehicle 10. Furthermore, the ego vehicle 10 is positioned between two third party vehicles 42.

A size of the projection area 32 is determined based on the determined vehicle dimensions of the ego vehicle 10. As can be best seen in figure 3, the projection area 32 is larger than the ego vehicle 10. Accordingly, margins are added to the vehicle dimensions of the ego vehicle 10 to define the projection area 32.

Step S150 refers to removing individual points 24 from the point cloud 22 in the projection area 32 of the ego vehicle 10 as non-relevant points.

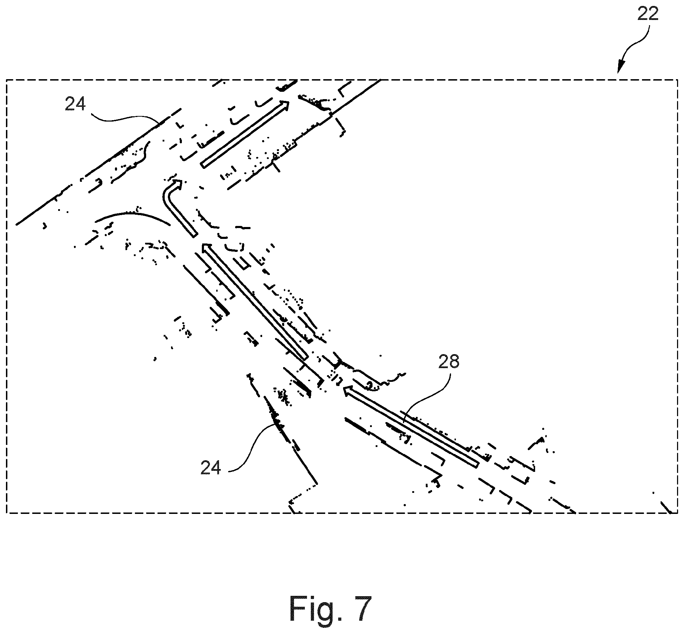

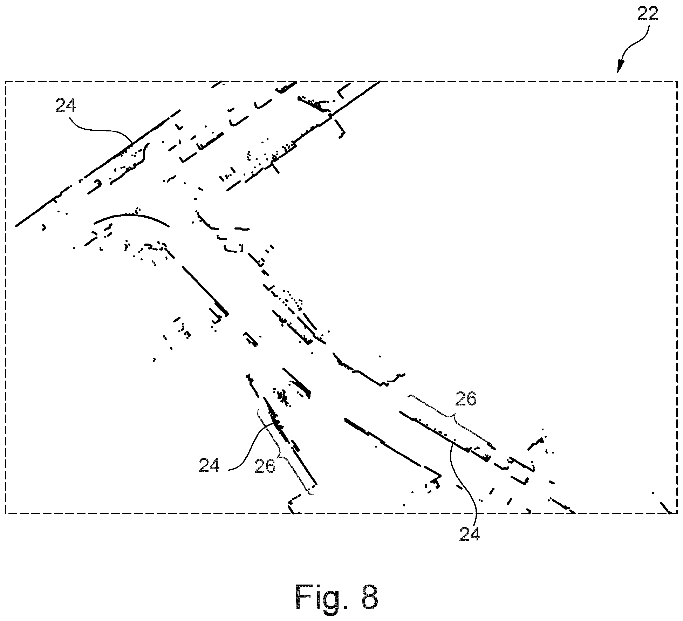

Non-relevant points are individual points 24 of the point cloud 22, which can be discarded. When the ego vehicle 10 passes a certain ground area, no relevant obstacles or structures can be present. This removal of non-relevant points can be best seen and understood with respect to the third driving scenario of figures 5 to 8. As can be seen in figure 6, the point cloud 22 corresponding to the driving scene shown as map-like representation in figure 5 contains all individual points 24 before removal of the non-relevant points. The ego vehicle 10 passes through the driving scene along the driving path 28, as indicated e.g. in figures 5 and 7. Hence, the individual points 24 along the driving path 28 are identified as non-relevant points and removed, which results in the point cloud 22 shown in figure 8, which does not contain the non-relevant points, which can still be seen in figure 6 before the removal of the non-relevant points.

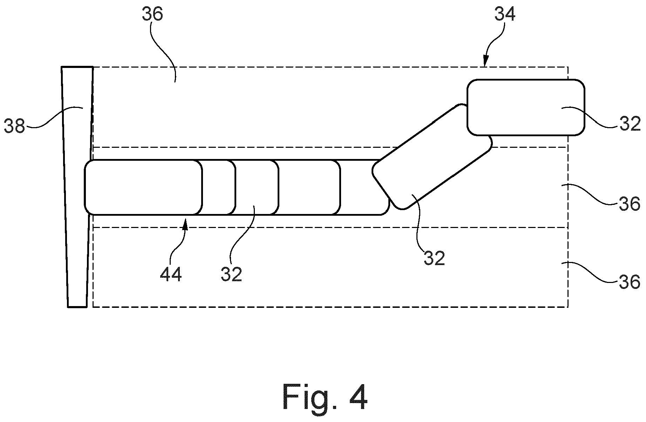

Step S160 refers to storing the current position of the ego vehicle 10 as previous position of the ego vehicle 10. Accordingly, when the previously described method steps are performed repeatedly, in step S140, the projection area 32 is determined for the current position together with the previous positions of the ego vehicle 10, as e.g. depicted in figure 4. The same principle as applied to the current position of the ego vehicle 10 are applied to the previous position(s). A combined projection area 32 is provided as a kind of belt-like area 44 covering the current and the previous position(s). Consequently, the non-relevant points can be removed from the point cloud 22 in this area and the belt-like area 44 is kept free from individual points 24, which are non-relevant.

This can be seen in detail in the second driving scenario of figure 4. The ego vehicle 10 is driving in accordance with the first driving scenario of figures 2 and 3 on a road 34 with three driving lanes 36, whereby the ego vehicle 10 changes its driving lane 36. Multiple individual projection areas 32 are provided along the driving path 28, which together form the belt-like area 44.

In respect to the first driving example, figure 2 shows the belt-like area 44 as continuous belt-like area 44, which is a simplified representation of the individual projection areas 32. Figure 2 shows a typical situation at the traffic light 38, when the traffic light 38 is red. The ego vehicle 10 and the third party vehicles 42 stop at the traffic light 38. Accordingly, the third party vehicles 42 are temporarily static and can be detected as part of the environment 20 in point cloud 22. Based on the belt-like area 44, the third party vehicle 42 located in driving direction 40 behind the ego vehicle 10 can be automatically removed, i.e. individual points 24 corresponding to the third party vehicle 42 located in driving direction 40 behind the ego vehicle 10 are identified as non-relevant points and are removed. The belt-like area 44 is shown in figure 2 already with in extension in the driving direction 40 ahead of the ego vehicle 10. This part of the belt-like area 44 is added to the belt-like area 44, when the traffic light 38 turns green and the ego vehicle 10 continues driving along the driving direction 40. Therefore, the third party vehicle 42 shown in the first driving scenario in driving direction 40 ahead of the ego vehicle 10 cannot be removed before the ego vehicle 10 has passed the position of this third party vehicle 42.

In an alternative embodiment, the method comprises an additional step of storing the current position of the ego vehicle 10. Furthermore, the steps of determining a projection area 32 with a projection of the ego vehicle 10 into the point cloud 22 based on the determined current position of the ego vehicle 10 and removing individual points 24 from the point cloud 22 in the projection area 32 of the ego vehicle 10 as non-relevant points are performed as off-line processing steps. Accordingly, the processing to remove the non-relevant points can be performed at any time independent from a driving state of driving condition of the ego vehicle 10. Preferably, the current position of the ego vehicle 10 is repeatedly stored, so that the entire driving path 28 of the ego vehicle 10 can be provided for offline processing and removal of the non-relevant points from the point cloud 22.

In an alternative embodiment, the point cloud 22 is a three-dimensional point cloud 22. Accordingly, as shown in figure 11, the ego vehicle 10 defines a projection area 32 with a vertical extension, which results in a tubular body 46. Furthermore, depending on the driving path 28 of the ego vehicle 10, which can be a three-dimensional driving path 28, the tubular body 46 can have any three-dimensional shape. The step of removing individual points 24 from the point cloud 22 in the projection area 32 of the ego vehicle 10 as non-relevant points is performed under consideration of the three-dimensional positions of the individual points 32 and the non-relevant points are removed from the point cloud 22 in the tubular body 46.

### Reference signs list

- 10: ego vehicle
- 12: driving support system
- 14: environment sensor, LiDAR-based environment sensor
- 16: processing unit
- 18: data connection
- 20: environment
- 22: point cloud
- 24: individual point
- 26: object or structure
- 28: driving path
- 30: global point cloud data set
- 32: projection area
- 34: road
- 36: driving lane
- 38: traffic light
- 40: driving direction
- 42: third party vehicle
- 44: belt-like area
- 46: tubular body

## Claims

1. Method for removing non-relevant points of a point cloud (22) corresponding to a point representation of an environment (20) of an ego vehicle (10) with multiple individual points (24), comprising the steps of
providing the point cloud (22) covering a position of the ego vehicle (10),
recognizing the environment (20) of the ego vehicle (10) using at least one environment sensor (14) of the ego vehicle (10),
determining a current position of the ego vehicle (10) within the point cloud (22) based on the recognition of the environment (20) of the ego vehicle (10),
determining a projection area (32) with a projection of the ego vehicle (10) into the point cloud (22) based on the determined current position of the ego vehicle (10), and
removing individual points (24) from the point cloud (22) in the projection area (32) of the ego vehicle (10) as non-relevant points.

2. Method according to claim 1, **characterized in that**
providing the point cloud (22) covering a position of the ego vehicle (10) comprises generating the point cloud (22) by the ego vehicle (10).

3. Method according to claim 1, **characterized in that**
providing the point cloud (22) covering a position of the ego vehicle (10) comprises receiving the point cloud (22) as externally generated point cloud (22).

4. Method according to any preceding claim, **characterized in that**
the method comprises an additional step of determining vehicle dimensions of the ego vehicle (10), and
the step of determining a projection area (32) with a projection of the ego vehicle (10) into the point cloud (22) based on the determined current position of the ego vehicle (10) comprises determining a size of the projection area (32) based on the determined vehicle dimensions of the ego vehicle (10).

5. Method according to any preceding claim, **characterized in that**
the method comprises an additional step of storing at least one previous position of the ego vehicle (10), and
the step of determining a projection area (32) with a projection of the ego vehicle (10) into the point cloud (22) comprises at least one projection of the ego vehicle (10) for the at least one previous position of the ego vehicle (10).

6. Method according to any preceding claim, **characterized in that**
the method comprises an additional step of transmitting the determined current position of the ego vehicle (10) within the point cloud (22) to a remote site for removing the individual points (24) from the point cloud (22) in the projection area (32) of the ego vehicle (10).

7. Method according to any preceding claim, **characterized in that**
the method comprises an additional step of transmitting the point cloud (22) after removal of the individual points (24) in the projection area (32) of the ego vehicle (10) to a remote site.

8. Method according to any preceding claim, **characterized in that**
the method comprises an additional step of storing the current position of the ego vehicle (10), and
the steps of determining a projection area (32) with a projection of the ego vehicle (10) into the point cloud (22) based on the determined current position of the ego vehicle (10) and removing individual points (24) from the point cloud (22) in the projection area (32) of the ego vehicle (10) as non-relevant points are performed as off-line processing steps.

9. Driving support system (12) comprising at least one environment sensor (14) for recognizing an environment (20) of an ego vehicle (10) and a processing unit (16), which receives sensor information from the at least one environment sensor (14) via a data connection (18) and processes the sensor information,
**characterized in that**
the driving support system (12) is adapted to perform the method of any of claims 1 to 8.

10. Driving support system (12) according to claim 9, **characterized in that**
the at least one environment sensor (14) comprises at least one out of a LiDAR-based environment sensor, radar sensor or an optical camera.

## Patentansprüche

1. Verfahren zum Entfernen nicht relevanter Punkte aus einer Punktwolke (22), die einer Punktdarstellung einer Umgebung (20) eines Ego-Fahrzeugs (10) mit mehreren einzelnen Punkten (24) entspricht, umfassend die Schritte Bereitstellen der Punktwolke (22), die eine Position des Ego-Fahrzeugs (10) abdeckt,
Erkennen der Umgebung (20) des Ego-Fahrzeugs (10) unter Verwendung mindestens eines Umgebungssensors (14) des Ego-Fahrzeugs (10),
Bestimmen einer aktuellen Position des Ego-Fahrzeugs (10) innerhalb der Punktwolke (22) basierend auf der Erkennung der Umgebung (20) des Ego-Fahrzeugs (10),
Bestimmen eines Projektionsbereichs (32) mit einer Projektion des Ego-Fahrzeugs (10) in die Punktwolke (22) auf der Grundlage der bestimmten aktuellen Position des Ego-Fahrzeugs (10), und
Entfernen einzelner Punkte (24) aus der Punktwolke (22) im Projektionsbereich (32) des Ego-Fahrzeugs (10) als nicht relevante Punkte.

2. Verfahren nach Anspruch 1, **dadurch gekennzeichnet, dass**
das Bereitstellen der Punktwolke (22), die eine Position des Ego-Fahrzeugs (10) abdeckt, das Erzeugen der Punktwolke (22) durch das Ego-Fahrzeug (10) umfasst.

3. Verfahren nach Anspruch 1, **dadurch gekennzeichnet, dass**
das Bereitstellen der Punktwolke (22), die eine Position des Ego-Fahrzeugs (10) abdeckt, das Empfangen der Punktwolke (22) als extern erzeugte Punktwolke (22) umfasst.

4. Verfahren nach einem der vorhergehenden Ansprüche, **dadurch gekennzeichnet, dass**
das Verfahren einen zusätzlichen Schritt des Bestimmens von Fahrzeugabmessungen des Ego-Fahrzeugs (10) umfasst, und
der Schritt des Bestimmens eines Projektionsbereichs (32) mit einer Projektion des Ego-Fahrzeugs (10) in die Punktwolke (22) auf der Grundlage der bestimmten aktuellen Position des Ego-Fahrzeugs (10) das Bestimmen einer Größe des Projektionsbereichs (32) auf der Grundlage der bestimmten Fahrzeugabmessungen des Ego-Fahrzeugs (10) umfasst.

5. Verfahren nach einem der vorhergehenden Ansprüche, **dadurch gekennzeichnet, dass**
das Verfahren einen zusätzlichen Schritt des Speicherns mindestens einer vorherigen Position des Ego-Fahrzeugs (10) umfasst, und
der Schritt des Bestimmens eines Projektionsbereichs (32) mit einer Projektion des Ego-Fahrzeugs (10) in die Punktwolke (22) zumindest eine Projektion des Ego-Fahrzeugs (10) für die zumindest eine vorherige Position des Ego-Fahrzeugs (10) umfasst.

6. Verfahren nach einem der vorhergehenden Ansprüche, **dadurch gekennzeichnet, dass**
das Verfahren einen zusätzlichen Schritt des Übertragens der bestimmten aktuellen Position des Ego-Fahrzeugs (10) innerhalb der Punktwolke (22) an einen entfernten Ort zum Entfernen der einzelnen Punkte (24) aus der Punktwolke (22) im Projektionsbereich (32) des Ego-Fahrzeugs (10) umfasst.

7. Verfahren nach einem der vorhergehenden Ansprüche, **dadurch gekennzeichnet, dass**
das Verfahren einen zusätzlichen Schritt des Übertragens der Punktwolke (22) nach dem Entfernen der einzelnen Punkte (24) im Projektionsbereich (32) des Ego-Fahrzeugs (10) an einen entfernten Ort umfasst.

8. Verfahren nach einem der vorhergehenden Ansprüche, **dadurch gekennzeichnet, dass**
das Verfahren einen zusätzlichen Schritt des Speicherns der aktuellen Position des Ego-Fahrzeugs (10) umfasst, und
die Schritte des Bestimmens eines Projektionsbereichs (32) mit einer Projektion des Ego-Fahrzeugs (10) in die Punktwolke (22) auf der Grundlage der bestimmten aktuellen Position des Ego-Fahrzeugs (10) und des Entfernens einzelner Punkte (24) aus der Punktwolke (22) im Projektionsbereich (32) des Ego-Fahrzeugs (10) als nicht relevante Punkte als Offline-Verarbeitungsschritte durchgeführt werden.

9. Fahrunterstützungssystem (12) mit mindestens einem Umgebungssensor (14) zur Erkennung einer Umgebung (20) eines Ego-Fahrzeugs (10) und einer Verarbeitungseinheit (16), die Sensorinformationen von dem mindestens einen Umgebungssensor (14) über eine Datenverbindung (18) empfängt und die Sensorinformationen verarbeitet,
**dadurch gekennzeichnet, dass**
das Fahrunterstützungssystem (12) ausgeführt ist, das Verfahren nach einem der Ansprüche 1 bis 8 durchzuführen.

10. Fahrunterstützungssystem (12) nach Anspruch 9, **dadurch gekennzeichnet, dass**
der mindestens eine Umgebungssensor (14) mindestens eines aus einem LiDAR-basierten Umgebungssensor, einem Radarsensor oder einer optischen Kamera umfasst.

## Revendications

1. Procédé d'élimination de points non pertinents d'un nuage de points (22) correspondant à une représentation par points d'un environnement (20) d'un égo-véhicule (10) avec de multiples points individuels (24), comprenant les étapes suivantes
fourniture du nuage de points (22) couvrant une position de l'égo-véhicule (10),
reconnaissance de l'environnement (20) de l'égo-véhicule (10) au moyen d'au moins un capteur d'environnement (14) de l'égo-véhicule (10),
détermination d'une position actuelle de l'égo-véhicule (10) au sein du nuage de points (22) sur la base de la reconnaissance de l'environnement (20) de l'égo-véhicule (10),
détermination d'une zone de projection (32) avec une projection de l'égo-véhicule (10) dans le nuage de points (22) sur la base de la position actuelle déterminée de l'égo-véhicule (10), et
élimination de points individuels (24) du nuage de points (22) dans la zone de projection (32) de l'égo-véhicule (10) en tant que points non pertinents.

2. Procédé selon la revendication 1, **caractérisé en ce que**
la fourniture du nuage de points (22) couvrant une position de l'égo-véhicule (10) comprend la génération du nuage de points (22) par l'égo-véhicule (10).

3. Procédé selon la revendication 1, **caractérisé en ce que**
la fourniture du nuage de points (22) couvrant une position de l'égo-véhicule (10) comprend la réception du nuage de points (22) sous forme de nuage de points généré en externe (22).

4. Procédé selon l'une quelconque des revendications précédentes, **caractérisé en ce que**
le procédé comprend une étape supplémentaire de détermination de dimensions de véhicule de l'égo-véhicule (10), et
l'étape de détermination d'une zone de projection (32) avec une projection de l'égo-véhicule (10) dans le nuage de points (22) sur la base de la position actuelle déterminée de l'égo-véhicule (10) comprend la détermination d'une taille de la zone de projection (32) sur la base des dimensions de véhicule déterminées de l'égo-véhicule (10).

5. Procédé selon l'une quelconque des revendications précédentes, **caractérisé en ce que**
le procédé comprend une étape supplémentaire de mémorisation d'au moins une position précédente de l'égo-véhicule (10), et
l'étape de détermination d'une zone de projection (32) avec une projection de l'égo-véhicule (10) dans le nuage de points (22) comprend au moins une projection de l'égo-véhicule (10) pour l'au moins une position précédente de l'égo-véhicule (10).

6. Procédé selon l'une quelconque des revendications précédentes, **caractérisé en ce que**
le procédé comprend une étape supplémentaire de transmission, vers un site distant, de la position actuelle déterminée de l'égo-véhicule (10) au sein du nuage de points (22) afin d'éliminer les points individuels (24) du nuage de points (22) dans la zone de projection (32) de l'égo-véhicule (10).

7. Procédé selon l'une quelconque des revendications précédentes, **caractérisé en ce que**
le procédé comprend une étape supplémentaire de transmission, vers un site distant, du nuage de points (22) à la suite de l'élimination des points individuels (24) dans la zone de projection (32) de l'égo-véhicule (10).

8. Procédé selon l'une quelconque des revendications précédentes, **caractérisé en ce que**
le procédé comprend une étape supplémentaire de mémorisation de la position actuelle de l'égo-véhicule (10), et
les étapes de détermination d'une zone de projection (32) avec une projection de l'égo-véhicule (10) dans le nuage de points (22) sur la base de la position actuelle déterminée de l'égo-véhicule (10) et d'élimination de points individuels (24) du nuage de points (22) dans la zone de projection (32) de l'égo-véhicule (10) en tant que points non pertinents sont réalisées sous forme d'étapes de traitement hors ligne.

9. Système (12) d'aide à la conduite, comprenant au moins un capteur d'environnement (14) destiné à reconnaître un environnement (20) d'un égo-véhicule (10) et une unité de traitement (16) qui reçoit des informations de capteur provenant de l'au moins un capteur d'environnement (14) par l'intermédiaire d'une connexion de données (18) et traite les informations de capteur,
**caractérisé en ce que**
le système (12) d'aide à la conduite est adapté à réaliser le procédé selon l'une quelconque des revendications 1 à 8.

10. Système (12) d'aide à la conduite selon la revendication 9, **caractérisé en ce que**
l'au moins un capteur d'environnement (14) comprend un capteur d'environnement basé sur la technologie LiDAR et/ou un capteur radar et/ou une caméra optique.
